# EUROPEAN PATENT APPLICATION

(11) **EP 4 382 964 A1**
(43) Date of publication of application: **12.06.2024**
(21) Application number: 21952863.5
(22) Date of filing: 06.08.2021
(51) Int. Cl.: G01S 13/86

(54) **POSITION ESTIMATION METHOD, WIRELESS COMMUNICATION DEVICE, AND WIRELESS COMMUNICATION SYSTEM**

(71) Applicant: Nippon Telegraph And Telephone Corporation, Chiyoda-ku Tokyo 100-8116 (JP)
(72) Inventor: IWAKUNI Tatsuhiko, Musashino-shi, Tokyo 180-8585 (JP); UCHIDA Daisei, Musashino-shi, Tokyo 180-8585 (JP); ARAI Takuto, Musashino-shi, Tokyo 180-8585 (JP); WAI Shuki, Musashino-shi, Tokyo 180-8585 (JP); KITA Naoki, Musashino-shi, Tokyo 180-8585 (JP)
(74) Representative: Brevalex
(86) International application number: PCT/JP2021/029326
(87) International publication number: WO 2023/013040

(57) **Abstract**

There is a position estimation method executed by a radio communication system including a radio communication device and another radio communication device, and the position estimation method includes a radio step of performing radio communication between the radio communication device and the other radio communication device using a directional beam, a relative position estimation step of estimating a relative position of the other radio communication device with respect to the radio communication device based on a direction of the directional beam in which a reception power of the directional beam is maximum in the other radio communication device and a distance corresponding to a round-trip-time of a radio signal between the radio communication device and the other radio communication device, and an absolute position estimation step of estimating the absolute position of the other radio communication device based on the absolute position of the radio communication device and the relative position of the other radio communication device.

## Description

### [Technical Field]

The present invention relates to a position estimation method, a wireless communication apparatus and a wireless communication system.

### [Background Art]

As standards for radio communication systems using millimeter waves and quasi-millimeter waves, "3rd Generation Partnership Project 5th Generation New Radio (3 GPP 5G NR)" and "IEEE 802.11ad" are known. Millimeter waves and quasi-millimeter waves are divided into high frequency bands. A radio communication system using such a high frequency band can secure a wide band as compared with a radio communication system using a microwave band. In a radio communication system using a high frequency band, the radio wave used as a carrier wave has high linearity, so that interference with other radio communication systems is low. For this reason, as a means for realizing a large capacity of radio communication, a radio communication system using a high frequency band has been put into practical use (see NPD 1).

The distance attenuation amount in a radio propagation path increases as the frequency of the radio wave increases. Therefore, in a radio communication system using a millimeter wave band, a radio communication device forms a directional beam toward another radio communication device which is a communication partner. That is, the radio communication device transmits a radio signal to another radio communication device which is a communication partner by executing beam forming. The other radio communication device, which is a communication partner, may form a directional beam and receive a radio signal.

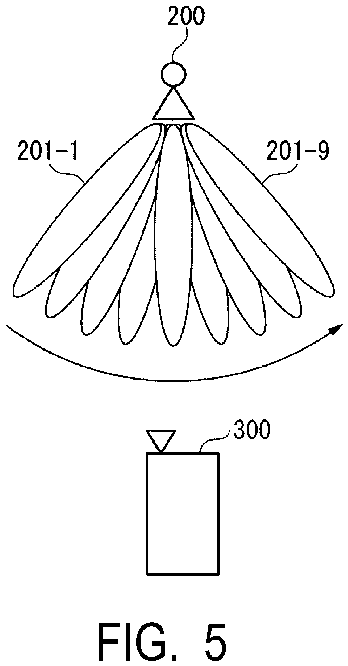

Fig. 5 is a diagram illustrating an example of a radio communication device 200 using beam forming in a millimeter wave band. The radio communication device 200 selects a directional beam 201 whose reception power is a maximum in a radio communication device 300 facing the radio communication device 200 from a plurality of formable directional beams (directional beam 201-1 to directional beam 201-9). In IEEE 802.11ad, the radio communication device 200 selects a directional beam 201 based on a Sector Level Sweep (SLS) (refer to NPD 2).

The radio communication device 200 which is a side (initiator) starting communication sequentially transmits radio signals to the radio communication device 300 in time division using the directional beam 201 sequentially transmitted from the directional beam 201-1 to the directional beam 201-9. That is, the radio communication device 200 transmits a radio signal to the radio communication device 300 in time division by executing sequential transmission (beam sweep) of the directional beam.

The radio communication device 300 which is a side (responder) responding to communication receives a signal transmitted from the radio communication device 200 in time division using the sequentially transmitted directional beam 201. The radio communication device 300 measures the reception power of the sequentially transmitted directional beams 201 with its own directional beam width as the maximum beam width. The radio communication device 300 shares identification information (ID) of the directional beam 201 from which the maximum reception power is obtained among the sequentially transmitted directional beams 201 with the radio communication device 200. Thus, the selection of the directional beam 201 is completed. The radio communication device 300 may transmit a radio signal to the radio communication device 200 using a directional beam.

In "5 GNR," the radio communication device 200 (base station device) sequentially transmits a plurality of signal blocks "synchronization signal/physical broadcast channel (SS/PBCH)" to the radio communication device 300 (terminal station device) in time division for each directional beam. The radio communication device 300 specifies the directional beam from which the maximum reception power is obtained based on the plurality of signal blocks. The radio communication device 300 feeds back the identification information (ID) of the specified directional beam to the radio communication device 200. Thus, the initial selection of the directional beam 201 is completed.

In a case where a shielding object exists in a propagation path between the antenna of the radio communication device 200 and the antenna of the radio communication device 300, the propagation loss of the radio signal is rapidly increased in a high frequency band, so that the transmission of the radio signal becomes difficult. Therefore, in high-frequency band communication, a radio signal is transmitted in an environment (line-of-sight environment) in which no shielding object exists between the antenna of the radio communication device 200 and the antenna of the radio communication device 300.

In addition, NPD 3 discloses a radio communication device having a distance measuring function unit based on a round-trip-time (RTT) of a radio signal.

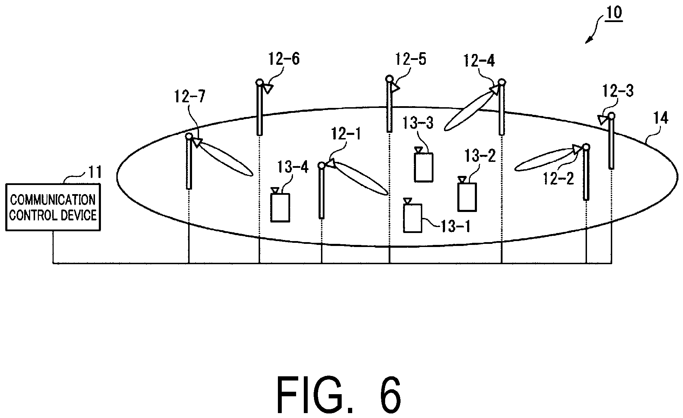

Fig. 6 is a diagram illustrating a configuration example of the radio communication system 10. The radio communication system 10 is a distributed antenna system using a high frequency band (see NPD 4). In the radio communication system 10, a plurality of base station devices 12 are distributed and disposed in a radio service area 14. A communication control device 11 selects a base station device 12 and a directional beam optimum for communicating with a predetermined terminal station device 13. In such a distributed antenna system, there is a high likelihood that the base station devices 12 will be distributed and disposed in a region where the base station devices 12 can communicate with each other.

### [Citation List]

### [Non Patent Documents]

[NPD 1] Takinami et al., "Standardization Trend and Elemental Technology for Millimeter Wave Band Radio LAN System," IEICE Communication Society Magazine, Autumn 2016, No. 38, pp.100-106.
[NPD 2] IEEE, "Part 11: Radio LAN Medium Access Control (MAC) and Physical Layer (PHY) Specifications Amendment 3: Enhancements for Very High Throughput in the 60 GHz Band" (IEEE Std 802.11ad-2012), 2012/12/28
[NPD 3] Iwakuni et al., "Experimental evaluation for handover control using a ranging function in high frequency band radio communication system," B-5-56, 2020 IEICE Society Conference [NPD 4] Uchida et al., "A study of high-frequency band distributed antenna system in terminal high-density and shielded environments," 2020 IEICE Society Conference, B-5-87

### [Summary of Invention]

### [Technical Problem]

The position of the terminal station device in the radio service area may be estimated based on the position of the base station device located in the radio service area. In this case, it is important that the position of the base station device, which is the standard, is estimated. The position of the base station device may be measured based on the radio waves transmitted from artificial satellites of a global navigation satellite system (GNSS). The global navigation satellite system includes, for example, a global positioning system (GPS) and a global navigation Satellite System (GLONASS) .

However, in order to utilize the global navigation satellite system, it is necessary for the base station device to include an antenna dedicated to positioning and a radio unit dedicated to positioning. In addition, the base station device can utilize the global navigation satellite system only in an outdoor environment where an artificial satellite can be seen. In this way, there is a problem that the base station device cannot utilize the global navigation satellite system at a position where the artificial satellite cannot be seen (for example, an indoor environment).

In view of the above circumstances, an object of providing a position estimation method, a radio communication device, and a radio communication system that can estimate a position of a base station device disposed at a position where an artificial satellite cannot be seen.

### [Solution to Problem]

One aspect of the present invention is position estimation method executed by a radio communication system including a radio communication device and another radio communication device, the method including a radio step of performing radio communication between the radio communication device and the other radio communication device using a directional beam, a relative position estimation step of estimating a relative position of the other radio communication device with respect to the radio communication device based on a direction of the directional beam in which a reception power of the directional beam is maximum in the other radio communication device and a distance corresponding to a round-trip-time of a radio signal between the radio communication device and the other radio communication device, and an absolute position estimation step of estimating the absolute position of the other radio communication device based on the absolute position of the radio communication device and the relative position of the other radio communication device.

An aspect of the present invention is a radio communication device including a radio unit that executes radio communication between the radio communication device and another radio communication device using a directional beam, and a data processing unit that estimates a relative position of the other radio communication device with respect to the radio communication device based on a direction of the directional beam in which a reception power of the directional beam is maximum in the other radio communication device and a distance corresponding to a round-trip-time of a radio signal between the radio communication device and the other radio communication device, and estimates an absolute position of the other radio communication device and the other radio communication device on the absolute position of the radio communication device and the relative position of the other wireless communication device.

An aspect of the present invention is a radio communication system including a radio communication device, and another radio communication device, the system including a radio unit that executes radio communication between the radio communication device and the other radio communication device using a directional beam, and a data processing unit that estimates a relative position of the other radio communication device with respect to the radio communication device based on a direction of the directional beam in which a reception power of the directional beam is maximum in the other radio communication device and a distance corresponding to a round-trip time of a radio signal between the radio communication device and the other radio communication device, and estimates an absolute position of the other radio communication device based on the absolute position of the radio communication device and the relative position of the other radio communication device.

### [Advantageous Effects of Invention]

According to the present invention, it is possible to estimate the position of the base station device arranged at a position where the artificial satellite cannot be seen.

### [Brief Description of Drawings]

[Fig. 1] Fig. 1 is a diagram illustrating a configuration example of a radio communication system according to an embodiment.
[Fig. 2] Fig. 2 is a diagram illustrating a configuration example of a base station device according to the embodiment.
[Fig. 3] Fig. 3 is a flowchart illustrating an operation example of a base station device in the embodiment.
[Fig. 4] Fig. 4 is a diagram illustrating a hardware configuration example of a radio communication device in the embodiment.
[Fig. 5] Fig. 5 is a diagram illustrating an example of the radio communication device using beamforming in a millimeter wave band.
[Fig. 6] Fig. 6 is a diagram illustrating a configuration example of a radio communication system.

### [Description of Embodiments]

An embodiment of the present invention will be described in detail with reference to the drawings.
Since a radio wave in a high frequency band has high linearity, a line-of-sight wave is mainly used in communication in the high frequency band. Based on the direction and distance of such radio waves (directional beams), a radio communication device (first base station device) in a distributed antenna system can estimate the position of another radio communication device (second base station device).

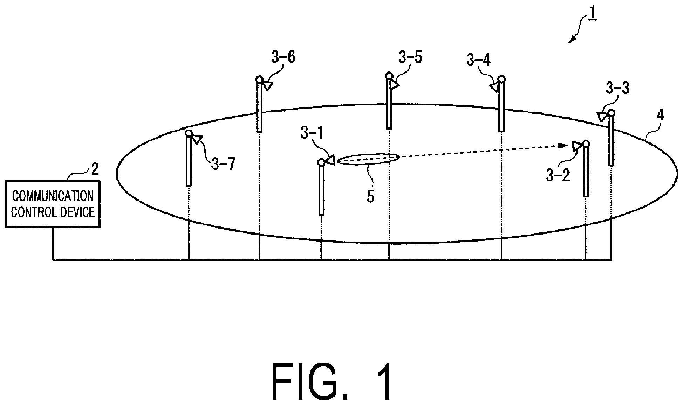

Fig. 1 is a diagram illustrating a configuration example of a radio communication system 1 (wireless communication system) according to an embodiment. The radio communication system 1 is a distributed antenna system using a high frequency band (millimeter wave and quasi-millimeter wave). The radio communication system 1 includes a communication control device 2 and a plurality of base station devices 3. In Fig. 1, the number of the plurality of base station devices 3 is seven as an example.

The plurality of base station devices 3 as each radio communication device (each radio station device) are disposed by being distributed in a radio service area 4. For example, a base station device 3-1 is disposed in an outdoor environment where an artificial satellite can be seen from the base station device. The position of the base station device 3-1 is known. For example, each of the base station devices 3 from a base station device 3-2 to a base station device 3-7 is disposed in an indoor environment where the artificial satellite cannot be seen from the base station device.

In the radio service area 4, one or more terminal station devices (not illustrated) may be present as radio communication devices which are communication partners of the plurality of base station devices 3. These terminal station devices are, for example, smartphone terminals, tablet terminals, and mobile terminals.

The base station device 3 is a radio communication device (wireless communication apparatus) distributed and disposed in the radio service area 4 in a distributed antenna system. Note that function sharing between the upper network of the base station device 3 and the base station device 3 is not limited to a specific function sharing.

A part of the hardware required for a terminal station device which is a communication partner of the base station device 3 and a part of the hardware required for the base station device 3 are common as hardware (for example, a radio unit, an antenna, or processor) of a radio communication device satisfying a specific communication standard. Therefore, whether the radio communication device operates as the base station device 3 or the radio communication device operates as the terminal station device is determined by switching software of a processor (for example, a data processing unit, or a control unit) for controlling hardware of the radio communication device. Therefore, the radio communication device disposed as the base station device 3 can be operated as the terminal station device.

Although the communication control device 2 controls the plurality of base station devices 3 disposed in a distributed manner in Fig. 1, three or more radio communication devices of a centralized unit (CU), a distributed unit (DU), and a radio unit (RU) in "5G NR" may operate as the base station device 3. An autonomous distributed radio communication device may operate as the base station device 3, such as a base station device in IEEE 802.11ad.

Hereinafter, as an example, the function of the base station device 3-2 is temporarily switched to the function of the terminal station device so that the base station device 3-2 temporarily operates as the terminal station device. In addition, the base station device 3-1 estimates a relative position of the base station device 3-2 with respect to the base station device 3-1. Thus, the position of the base station device 3-2 disposed at a position where the artificial satellite cannot be seen is estimated.

The communication control device 2 controls the operation of each base station device 3. In a case where the absolute position of the base station device 3-2 is not estimated, the communication control device 2 causes the base station device 3-2 to execute the operation of a terminal station device as a communication partner of the base station device 3-1. The communication control device 2 switches the operation (function) of the base station device 3-2 to temporarily operate the base station device 3-2 as a terminal station device being a communication partner of the base station device 3-1. The base station device 3-2 executes the operation of the terminal station device based on an instruction from the outside (for example, the communication control device 2) of the base station device 3-2. Thus, the base station device 3-1 can execute communication determined by the communication standard using a directional beam 5 of the radio signal with the base station device 3-2. In a case where the absolute position of the base station device 3-2 is estimated, the communication control device 2 causes the base station device 3-2 to execute the operation of the base station device.

The base station device 3-1 may communicate with the other base station device 3 other than the base station device 3-2 in order to estimate the position of the other base station device 3 other than the base station device 3-2.

The base station device 3-1 executes sequential transmission (beam sweep) of the directional beam when executing beam forming. The base station device 3-1 estimates the direction of the directional beam 5 in which the reception power of the directional beam 5 becomes maximum in the base station device 3-2 as the direction of the base station device 3-2 to the base station device 3-1.

The base station device 3-1 estimates the distance between the base station device 3-1 and the base station device 3-2 by executing range finding processing based on the round-trip-time of the radio signal between the base station device 3-1 and the base station device 3-2. The base station device 3-1 may estimate the distance between the base station device 3-1 and the base station device 3-2 by executing the range finding processing based on the distance attenuation characteristic of the radio signal between the base station device 3-1 and the base station device 3-2.

The base station device 3-1 estimates the relative position of the base station device 3-2 with respect to the base station device 3-1 based on the direction of the base station device 3-2 to the base station device 3-1 and the distance between the base station device 3-1 and the base station device 3-2.

Since the absolute position of the base station device 3-1 is known using the global navigation satellite system or the like, even when the base station device 3-2 exists outside the range of the global navigation satellite system (for example, indoor environment), the base station device 3-1 can estimate the absolute position of the base station device 3-2 based on the relative position of the base station device 3-2 to the base station device 3-1. The base station device 3-1 may transmit the absolute position of the base station device 3-2 to the communication control device 2 and the base station device 3-2.

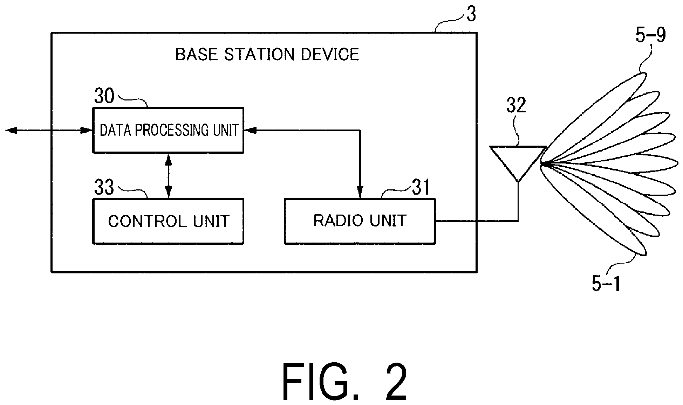

Fig. 2 is a diagram illustrating a configuration example of the base station device 3 in the embodiment. The base station device 3 (radio communication device) includes a data processing unit 30, a radio unit 31, an antenna 32, and a control unit 33.

The data processing unit 30 executes data processing for operating as a base station device supporting a predetermined communication standard. For example, the data processing unit 30 acquires a connection request received from another base station device 3 operating as a terminal station device from the radio unit 31. The data processing unit 30 executes connection management of the other base station device 3 which has transmitted the connection request based on the connection request. For example, the data processing unit 30 outputs data input from an upper network (not illustrated) to the radio unit 31. For example, the data processing unit 30 outputs data input from the radio unit 31 to an upper network (not illustrated). The data processing unit 30 may output the data input from the radio unit 31 to an interface of an upper network (not illustrated).

In a case where the host base station device (host radio communication device) operates as a terminal station device to be subjected to the range finding processing, the data processing unit 30 executes data processing for operating the host base station device as a terminal station device supporting a predetermined communication standard. For example, the data processing unit 30 outputs data transmitted from its host base station device toward the base station device 3 for executing the range finding processing to the radio unit 31.

The radio unit 31 transmits the data output from the data processing unit 30 as a radio signal from an antenna 32 by executing beam forming of the directional beam 5. The radio unit 31 outputs the data in accordance with the radio signal received using the antenna 32 to the data processing unit 30.

The control unit 33 (function switching control unit) instructs the data processing unit 30 to execute an operation as a base station device or an operation as a terminal station device by switching software of the data processing unit 30 based on a predetermined trigger. For example, the control unit 33 instructs the data processing unit 30 to execute an operation as a base station device or an operation as a terminal station device by switching software of the data processing unit 30 based on an instruction (trigger) transmitted from an upper network (not illustrated).

In a case where the host base station device operates as a base station device for executing the range finding processing, the control unit 33 causes the data processing unit 30 to execute a function as a base station device determined in the communication standard. The function as the base station device is, for example, a function of finding a distance between a terminal station device existing around the base station device and its host base station device.

In a case where the host base station device operates as a terminal station device to be subjected to the range finding processing, the control unit 33 causes the data processing unit 30 to execute a function as a terminal station device determined in the communication standard instead of causing the data processing unit 30 to execute a function as the base station device determined in the communication standard. The function as the terminal station device is, for example, a function for detecting (retrieving) another base station device 3 existing around the base station device. In a case where another base station device 3 existing in the periphery is detected, the control unit 33 causes the data processing unit 30 to execute processing for transmitting a connection request to the base station device 3.

As a trigger for the control unit 33 to instruct the data processing unit 30 to switch the function to operate as a terminal station device, a trigger such as (A-1), (A-2), or (A-3) exemplified below is exemplified.

### (A-1) Trigger caused by the base station device 3 being newly disposed in the radio service area 4

The base station device 3 is temporarily operated as a terminal station device at a timing when the power source of the newly disposed base station device 3 is turned on. The control unit 33 of the newly disposed base station device 3 switches the function of the data processing unit 30 so that the host base station device temporarily operates as a terminal station device.

### (A-2) Trigger caused by the communication control device 2 (higher-level device) periodically instructing the control unit 33 of the arbitrary base station device 3

It is easy to move the position of a relatively small base station device (for example, an access point of a radio local area network (LAN)). Therefore, there is a possibility that the base station device 3 moves together with the movement of the furniture indoors. In order to cope with such a movement, the communication control device 2 (higher-level device) periodically transmits a function switching instruction to the base station device 3. The communication control device 2 may estimate the position of each base station device 3 in the radio service area 4 using the base station device 3 whose absolute position in the radio service area 4 is known.

### (A-3) Trigger caused by the fact that the number of terminal station devices communicatively connected to the base station device 3 is 0

In a case where the number of terminal station devices communicatively connected to the base station device 3 is 0, the base station device 3 operates as a terminal station device. That is, in a case where there is no communication partner of the base station device 3, the base station device 3 operates as a terminal station device. Thus, even in a case where there is no instruction to the base station device 3 from the outside, the base station device 3 can operate as a terminal station device.

It is necessary to return the operation of the base station device 3 which is temporarily operating as the terminal station device to the operation of the base station device. As a trigger for the control unit 33 to instruct the data processing unit 30 to return the operation of the base station device 3 to the original operation of the base station device, a trigger such as (B-1) or (B-2) described below is exemplified.

### (B-1) Trigger caused by a timer of a predetermined time

At the same time as switching the operation of the data processing unit 30 to temporarily operate as a terminal station device, the control unit 33 sets a timer for a predetermined time. The control unit 33 switches the operation (function) of the data processing unit 30 so that the base station device 3 operates as a base station device simultaneously with the expiration of the timer.

(B-2) Trigger caused by an instruction transmitted from at least one of the other base station device facing the host base station device and the communication control device 2 In a case where the estimation of the position of the base station device 3 (radio communication device) operating as the terminal station device is completed, the base station device 3 or the communication control device 2 which has performed the range finding processing transmits an estimation completion signal to the base station device 3. In a case where the estimation completion signal is acquired, the control unit 33 of the base station device 3 operating as a terminal station device transmits a function switching instruction to the data processing unit 30 so that the host base station device operates as a base station device.

Each trigger of (A-1), (A-2), and (A-3) above and (B-2) and (B-2) above may be combined.

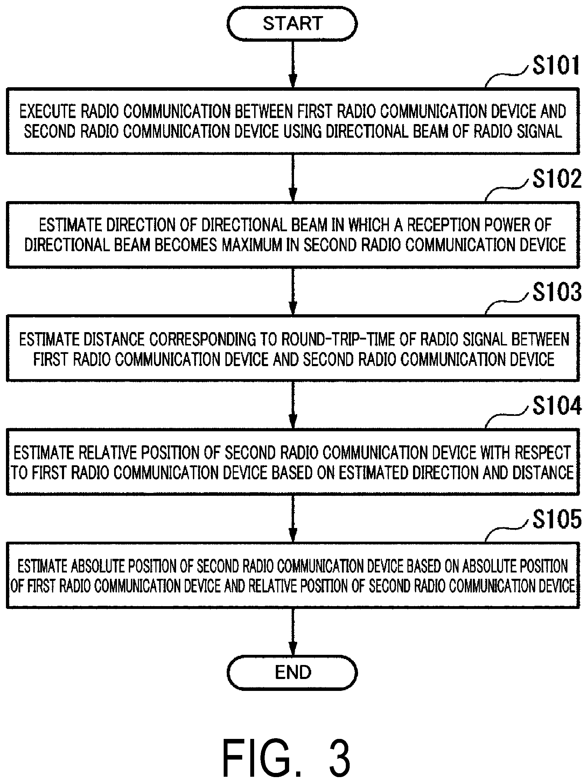

Next, the operation example of the radio communication system 1 will be described. Fig. 3 is a flow chart illustrating an operation example of the radio communication system 1 according to the embodiment. The radio unit 31 of the base station device 3-1 (first radio communication device) executes radio communication between the base station device 3-1 and the base station device 3-2 (second radio communication device) using the directional beam 5 of the radio signal (step S101).

The data processing unit 30 of the base station device 3-1 estimates the direction of the directional beam 5 in which the reception power of the directional beam 5 becomes maximum in the base station device 3-2 based on feedback from the base station device 3-2 (step S102). The data processing unit 30 of the base station device 3-1 estimates a distance between the base station device 3-1 and the base station device 3-2 based on a round-trip-time of a radio signal between the base station device 3-1 and the base station device 3-2 (step S103) .

The data processing unit 30 of the base station device 3-1 estimates a relative position of the base station device 3-2 to the base station device 3-1 based on the estimated direction and distance (step S104). The data processing unit 30 of the base station device 3-1 estimates the absolute position of the base station device 3-2 based on the absolute position of the base station device 3-1 and the relative position of the base station device 3-2 (step S105).

As described above, the radio unit 31 executes the radio communication between the base station devices 3-1 and 3-2 using the directional beam. The data processing unit 30 estimates the direction of the directional beam where the reception power of the directional beam becomes the maximum in the base station device 3-2. The data processing unit 30 estimates a distance corresponding to a round-trip-time of the radio signal between the base station device 3-1 and the base station device 3-2. That is, the data processing unit 30 estimates the distance between the base station device 3-1 and the base station device 3-2. The data processing unit 30 estimates a relative position of the base station device 3-2 to the base station device 3-1 based on the estimated direction and the estimated distance. The data processing unit 30 estimates the absolute position of the base station device 3-2 based on the absolute position of the base station device 3-1 and the relative position of the base station device 3-2.

Accordingly, it is possible to estimate the position of the base station device disposed at a position where the artificial satellite cannot be seen. Even if the base station device does not include an antenna dedicated to positioning and a radio unit dedicated to positioning, the position of another base station device in an indoor environment in the distributed antenna system can be estimated.

In the embodiment, by rewriting internal processing (software) of the data processing unit 30 (processor) of the base station device 3, whether the base station device 3 operates as a base station device or as a terminal station device is switched. On the other hand, the base station device 3 may physically include a first data processing unit (processor) for executing an operation as the base station device and a second data processing unit (processor) for executing an operation as the terminal station device.

### (Hardware Configuration Example)

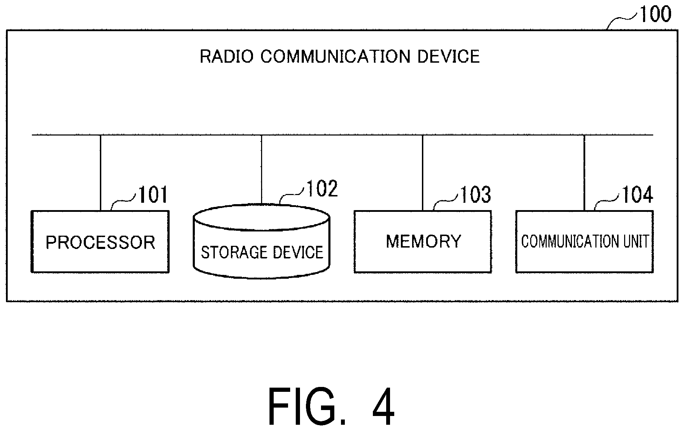

Fig. 4 is a diagram illustrating a hardware configuration example of the radio communication device 100 according to the embodiment. The radio communication device 100 corresponds to the base station device 3. A part or all of each functional unit of the radio communication device 100 is implemented as software by a processor 101 such as a central processing unit (CPU) executing a program stored in a storage device 102 having a non-volatile recording medium (non-temporary recording medium) and a memory 103. The program may be recorded on a computer-readable non-temporary recording medium. The computer-readable non-temporary recording medium is, for example, a portable medium such as a flexible disk, a magneto-optical disk, a read only memory (ROM) or a compact disc read only memory (CD-ROM), or a non-temporary recording medium such as a storage device such as a hard disk built in a computer system. A communication unit 104 executes the predetermined communication processing. The communication unit 104 may acquire data and a program.

A part or all of each functional unit of the radio communication device 100 may be implemented, for example, using hardware including an electronic circuit or circuitry in which a large scale integrated circuit (LSI), an application specific integrated circuit (ASIC), a programmable logic device (PLD), a field programmable gate array (FPGA), or the like is used.

Although the embodiment of the present invention has been described in detail with reference to the drawings, a specific configuration is not limited to this embodiment, and design within the scope of the gist of the present invention, and the like are included.

### [Industrial Applicability]

The present invention is applicable to distributed antenna systems.

### [Reference Signs List]

- 1: radio communication system
- 2: communication control device
- 3: base station device
- 4: radio service area
- 5: directional beam
- 10: radio communication system
- 11: communication control device
- 12: base station device
- 13: terminal station device
- 30: data processing unit
- 31: radio unit
- 32: antenna
- 33: control unit
- 100: radio communication device
- 101: processor
- 102: storage device
- 103: memory
- 104: communication unit
- 200: radio communication device
- 201: directional beam
- 300: radio communication device

## Claims

1. A position estimation method executed by a radio communication system including a radio communication device and another radio communication device, the method comprising:
a radio step of performing radio communication between the radio communication device and the other radio communication device using a directional beam;
a relative position estimation step of estimating a relative position of the other radio communication device with respect to the radio communication device based on a direction of the directional beam in which a reception power of the directional beam is maximum in the other radio communication device and a distance corresponding to a round-trip-time of a radio signal between the radio communication device and the other radio communication device; and
an absolute position estimation step of estimating the absolute position of the other radio communication device based on the absolute position of the radio communication device and the relative position of the other radio communication device.

2. The position estimation method according to claim 1, further comprising:
a switching step of causing the other radio communication device to execute an operation of a terminal station device as a communication partner of the radio communication device that is a base station device in a case where the absolute position of the other radio communication device is not estimated, and causing the other radio communication device to execute an operation of the base station device in a case where the absolute position of the other radio communication device is estimated.

3. The position estimation method according to claim 2, wherein the other radio communication device performs an operation of the terminal station device based on an instruction from outside the other radio communication device.

4. The position estimation method according to claim 2, wherein the other radio communication device performs an operation of the terminal station device in a case where there is no communication partner of the other radio communication device.

5. A radio communication device comprising:
a radio unit that executes radio communication between the radio communication device and another radio communication device using a directional beam; and
a data processing unit that estimates a relative position of the other radio communication device with respect to the radio communication device based on a direction of the directional beam in which a reception power of the directional beam is maximum in the other radio communication device and a distance corresponding to a round-trip-time of a radio signal between the radio communication device and the other radio communication device, and estimates an absolute position of the other radio communication device based on the absolute position of the radio communication device and the relative position of the other radio communication device.

6. A radio communication system comprising:
a radio communication device;
another radio communication device;
a radio unit that executes radio communication between the radio communication device and the other radio communication device using a directional beam; and
a data processing unit that estimates a relative position of the other radio communication device with respect to the radio communication device based on a direction of the directional beam in which a reception power of the directional beam is maximum in the other radio communication device and a distance corresponding to a round-trip time of a radio signal between the radio communication device and the other radio communication device, and estimates an absolute position of the other radio communication device based on the absolute position of the radio communication device and the relative position of the radio communication device.
